# FASCICULE DE BREVET EUROPEEN

(11) **EP 1 612 126 B1**
(45) Date de publication et mention de la délivrance du brevet: **23.09.2009**
(21) Numéro de dépôt: 04291671.8
(22) Date de dépôt: 01.07.2004
(51) Int. Cl.: B62D 21/15, B60R 19/14

(54) **Dispositif de châssis de véhicule automobile**
Stossdämpfer für Kraftfahrzeuge
Bumper device for vehicles

(43) Date de publication de la demande: 04.01.2006
(73) Titulaire: Jean Chereau SAS, 50220 Ducey (FR)
(72) Inventeur: Courteille, Benoît, 50300 Le Val Saint Pere (FR)
(74) Mandataire: de Kernier, Gabriel

(56) Documents cités:
- EP-B- 0 648 644
- DE-A- 1 505 470
- FR-A- 1 038 120
- FR-A- 2 812 254
- US-A- 3 843 180
- US-A- 4 541 661
- US-A- 4 979 770
- US-A- 5 004 394
- US-A- 5 478 124
- US-B1- 6 217 090

## Description

La présente invention concerne le domaine des châssis de véhicules automobiles.

On utilise généralement des châssis de véhicule automobile comprenant, à une extrémité arrière, des bras de butée pourvus d'éléments amortisseurs en saillie par rapport à une surface arrière de la caisse du véhicule pour permettre l'accostage du véhicule en marche arrière contre un bord vertical rigide, par exemple un quai de chargement, sans détériorer ladite surface arrière de caisse et le bras de butée, tout en diminuant sensiblement les efforts encaissés par le châssis lors de l'accostage.

On connaît des véhicules automobiles (par exemple US 4541661 et FR 2812254) de type poids lourd, comprenant un châssis pourvu d'un corps de châssis allongé, de deux bras de butée montés rigidement de façon sensiblement transversale par rapport audit corps de châssis et s'étendant vers l'extérieur, chacun desdits bras étant pourvu d'un élément amortisseur réalisé sous la forme d'un bloc de caoutchouc, et monté sur une face arrière.

De tels châssis présentent l'inconvénient de comprendre des éléments amortisseurs destinés à être en contact avec un élément extérieur au dispositif, notamment un quai de chargement, subissant une détérioration rapide. Il en résulte ainsi des remplacements répétés et coûteux. En effet, lors du chargement du véhicule automobile, le châssis a tendance à s'abaisser ce qui génère des efforts de cisaillement au niveau de la surface de contact des éléments amortisseurs avec le quai de chargement.

La présente invention vise à remédier à ces inconvénients, en proposant un dispositif de châssis de véhicule automobile permettant d'accroître sensiblement la fiabilité et la durée de vie des éléments amortisseurs du dispositif.

A cet effet, le dispositif de châssis de véhicule automobile pourvu d'un corps de châssis allongé s'étendant sensiblement horizontalement, d'au moins un élément de butée monté à une extrémité arrière du corps de châssis, de façon sensiblement transversale par rapport audit corps et s'étendant vers l'extérieur, d'un élément amortisseur apte à amortir les efforts lors d'un choc de l'élément de butée avec un élément extérieur au dispositif. L'élément amortisseur est monté entre le corps de châssis et l'élément de butée.

Un tel dispositif de châssis présente l'avantage de comprendre un élément amortisseur monté entre le corps de châssis et l'élément de butée, permettant de se dégager de contraintes de remplacement dudit élément amortisseur dues à une usure prématurée causée par le frottement de l'élément amortisseur contre un quai de chargement lors du chargement du véhicule automobile.

La conception du châssis permet ainsi d'éviter de générer, au niveau de l'élément amortisseur élastique, des sollicitations mécaniques de cisaillement causant une détérioration rapide, ledit élément amortisseur travaillant ici uniquement en compression. En d'autres termes, l'élément amortisseur a uniquement pour fonction l'amortissement du choc contre le quai de chargement.

L'élément de butée comprend un bras de butée mobile sensiblement longitudinalement par rapport au corps de châssis.

Le bras de butée comprend au moins un élément de contact apte à venir en appui contre un élément extérieur au dispositif, l'élément de contact étant monté sur une face arrière du bras de butée. L'élément de contact comprent au moins un rouleau monté à rotation sur le bras de butée. Le rouleau peut avantageusement être réalisé en matière métallique.

De préférence, le bras de butée est monté à rotation sur le corps de châssis autour d'un axe d'articulation sensiblement vertical.

Le dispositif peut avantageusement comprendre deux bras de butée symétriques entre eux par rapport à un plan médian longitudinal du corps de châssis.

Un tel dispositif présente l'avantage de comprendre deux bras de butée montés à une extrémité arrière du corps de châssis et s'étendant vers l'extérieur de façon transversale. Le châssis est ainsi dépourvu d'éléments de butée au niveau d'une portion centrale.

Le dispositif permet non seulement de réaliser l'accostage et le chargement d'un véhicule automobile contre un quai de chargement sans nécessiter un changement régulier des éléments amortisseurs, mais permet également le chargement du véhicule à partir du sol, à l'aide d'un hayon élévateur, de conception classique, fixé sur les longerons entre les jambages. En effet, le dispositif pouvant être ainsi dépourvu d'éléments de butée ou d'éléments amortisseurs au niveau de sa zone centrale arrière, il n'est pas nécessaire de prévoir de hayons élévateurs spécifiques pour permettre le chargement du véhicule automobile tout en évitant lesdits éléments. Le châssis permet donc d'éviter des coûts supplémentaires relatifs à un hayon élévateur spécifique nécessitant, en outre, une maintenance propre.

Dans un mode de réalisation, le dispositif comprend un bras d'appui monté de façon transversale par rapport au corps de châssis et décalé vers l'avant par rapport au bras de butée, l'élément amortisseur étant monté entre ledit bras d'appui et le bras de butée. L'élément amortisseur peut être monté sur le bras d'appui sensiblement en regard d'une face du bras de l'élément de butée.

De préférence, le dispositif comprend une jambe de force montée obliquement entre le corps de châssis et le bras d'appui.

Dans un mode de réalisation, le dispositif comprend une jambe de force montée obliquement entre le corps de châssis et le bras de butée, l'élément amortisseur étant monté entre une extrémité de la jambe de force et le bras de butée.

Un tel dispositif présente l'avantage de comprendre un rouleau présentant une surface de contact rigide avec un élément extérieur au dispositif, notamment un quai de chargement, permet de rendre négligeable les efforts de cisaillement lors du chargement du véhicule automobile. En effet, l'utilisation d'un matériau rigide permet d'éviter un écrasement du rouleau pouvant empêcher sa rotation.

De préférence, le rouleau comprend une surface extérieure de révolution sensiblement bombée.

Avantageusement, l'élément de contact est monté sur le bras de rappel, à l'opposé d'un axe d'articulation dudit bras.

Dans un mode de réalisation, l'élément de butée est supporté par le châssis et comprend au moins un élément de contact apte à venir en appui contre un élément extérieur au dispositif, et monté à rotation sensiblement horizontalement sur l'élément de butée.

L'invention vise également un véhicule automobile, notamment du type poids lourd, comprenant un dispositif de châssis selon un aspect de l'invention.

La présente invention sera mieux comprise à la lecture de la description détaillée d'un mode de réalisation pris à titre d'exemple nullement limitatif et illustré par les dessins annexés, sur lesquels :
- la figure 1 est une vue en perspective d'un dispositif de châssis de véhicule automobile selon un aspect de l'invention ;
- les figures 2 et 3 sont des vues de dessus partielles du dispositif de châssis de la figure 1 ; et
- la figure 4 est une vue éclatée partielle du dispositif de châssis de la figure 1.

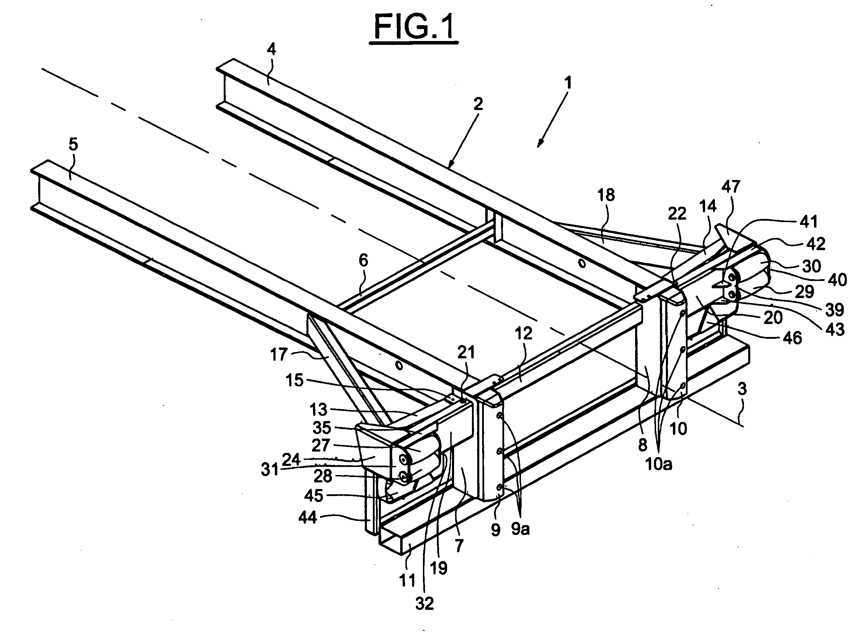

Comme on peut le voir sur la figure 1, le châssis, référencé 1 dans son ensemble, comprend un corps de châssis 2 de type échelle et de forme générale rectangulaire, s'étendant sensiblement longitudinalement suivant un axe 3 médian. Le corps de châssis 2 comprend deux longerons 4 et 5, présentant en section un profil sensiblement en I ou en C, espacés et parallèles entre eux et s'étendant sensiblement suivant l'axe 3, et une entretoise 6 montée transversalement entre les longerons 4 et 5 au niveau de faces orientées vers l'intérieur, de manière à maintenir un écartement sensiblement constant entre lesdits longerons 4, 5. Sur le dessin, une unique entretoise 6 est représentée entre les longerons 4 et 5 alors que dans la réalité une pluralité d'entretoises sont disposées.

Le châssis 1 comprend également deux jambages 7 et 8, montés de façon rigide respectivement à une extrémité arrière des longerons 4 et 5, par exemple à l'aide d'organes de fixation (non représentés), ou par soudage. On entend ici par « extrémité arrière », l'extrémité des longerons destinée à supporter une partie arrière d'un véhicule automobile. Les jambages 7, 8, de section rectangulaire, s'étendent sensiblement verticalement vers le bas à partir d'une extrémité supérieure des longerons 4, 5 et présente une dimension transversale sensiblement inférieure à la dimension transversale de l'entretoise 6.

Les jambages 7 et 8 sont respectivement pourvus de butoirs 9 et 10, réalisés en matière synthétique souple, lesdits butoirs 9, 10 comprenant respectivement des trous 9a, 10a aptes à permettre le passage d'éléments de fixation pour permettre la mise en position desdits butoirs 9, 10 sur les jambages 7, 8. Les butoirs 9, 10 sont montés sur une face arrière des jambages 7 et 8 et présente une dimension transversale sensiblement égale à la dimension transversale desdits jambages 7, 8. Les butoirs 9, 10 sont montés sur les jambages 7 et 8, de manière à venir en contact lors du recul du véhicule, avec un élément en saillie verticale par rapport au sol, notamment un quai de chargement. Les butoirs 9, 10 présentent une dimension verticale sensiblement égale à la dimension verticale des jambages 7, 8.

Le châssis 1 comprend également une barre 11 anti-encastrement creuse, de section rectangulaire, fixée aux extrémités inférieures des jambages 7, 8, ladite barre 11 s'étendant de façon sensiblement transversale par rapport aux longerons 4, 5. La face arrière de la barre 11 anti-encastrement est sensiblement alignée avec la face arrière des jambages 7, 8. En d'autres termes, la face arrière de la barre 11 anti-encastrement est décalée vers l'avant par rapport aux butoirs 9 et 10, de manière à avoir uniquement lesdits butoirs 8, 9 en contact avec un élément extérieur au dispositif lors du recul du véhicule automobile.

Le dispositif de châssis 1 comprend, à son extrémité arrière, une entretoise 12 fixée transversalement entre les jambages 7 et 8, à proximité de leurs extrémités supérieures, par exemple par soudage, et des bras d'appui 13, 14 fixés respectivement de façon transversale par rapport aux jambages 7 et 8, et s'étendant vers l'extérieur. Les bras d'appui 13 et 14, de forme générale rectangulaire, sont montés respectivement au niveau d'une extrémité supérieure des jambages 7 et 8, sur une face orientée vers l'extérieur. En d'autres termes, le bras d'appui 13, 14 est monté sur le jambage 7, 8 sur une face opposée dans le sens transversal à la face sur laquelle est montée l'entretoise 12.

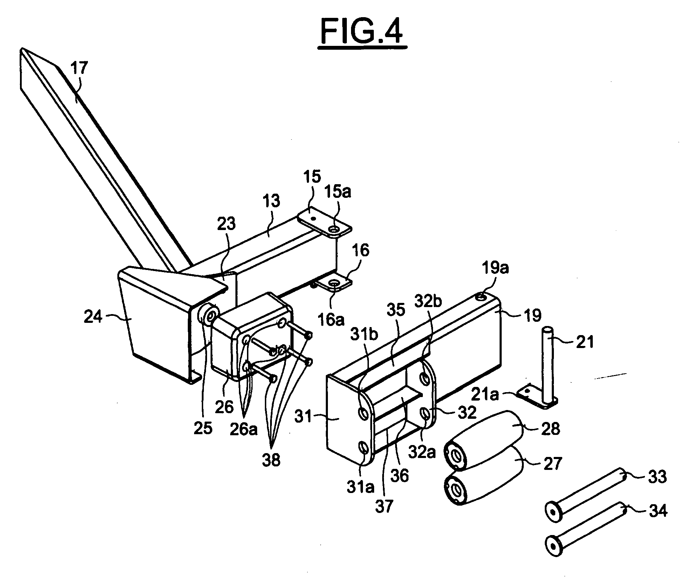

Le bras d'appui 13 est fixé sur le jambage 7, ici par soudage. La fixation du bras d'appui 13 est renforcée par l'intermédiaire de pièces de fixation 15, 16 (figure 4), de forme générale rectangulaire, montées sur des faces supérieure et inférieure dudit bras d'appui 13, par exemple par soudage. Les pièces de fixation 15 et 16, par exemple des chapes soudées sur le jambage 7, présentent une dimension longitudinale sensiblement supérieure à la dimension longitudinale du bras d'appui 13 de manière que des trous 15a, 16a ménagés dans lesdites pièces de fixation 15, 16 soient décalés vers l'arrière par rapport au bras d'appui 13. D'une manière analogue, le bras d'appui 14 est monté sur le jambage 8 par l'intermédiaire de pièces de fixation (non représentées), du même type que celles décrites précédemment.

Le châssis 1 comprend des jambes de force 17 et 18, montées respectivement obliquement entre les longerons 5, 4 et une extrémité extérieure d'une face avant des bras d'appui 13, 14 formant un triangle indéformable. Le châssis 1 comprend des éléments de butée réalisés ici sous forme de bras de butée 19, 20. Les bras de butée 19, 20 sont décalés vers l'arrière par rapport aux bras d'appui 13, 14, et montés respectivement à proximité d'une extrémité supérieure des jambages 7, 8. Les bras de butée 19, 20 sont symétriques entre eux par rapport à un plan médian longitudinal vertical du corps de châssis 2, et s'étendent respectivement sensiblement à partir des jambages 7, 8 transversalement vers l'extérieur. Les bras de butée 19, 20 présente une dimension transversale sensiblement égale à la dimension transversale des bras d'appui.

Le bras de butée 19, de section générale en C orienté vers l'avant, présente une hauteur sensiblement égale à la hauteur du bras d'appui 13 et s'étend sensiblement vers l'extérieur de manière qu'une extrémité dudit bras 13 soit sensiblement dans le même plan qu'un plan vertical comprenant l'extrémité de la barre 11 anti-encastrement. Le bras de butée 19 comprend, à proximité des jambages 7, des évidements 19a circulaires venant en regard des trous 15a et 16a des pièces de fixation 15 et 16 et permettant le passage d'un axe d'articulation 21 (figure 4), pour articuler en rotation le bras de butée 19 par rapport au jambage 7 et au corps de châssis 2. L'axe d'articulation 21 est lié rigidement avec une platine 21a (figure 4) fixée de façon amovible sur la pièce de fixation 16 afin de permettre le maintien dudit axe d'articulation 21. D'une manière analogue, le bras de butée 20 est monté à rotation sur la pièce de fixation solidaire du bras d'appui 14 par l'intermédiaire d'un axe d'articulation 22.

Comme illustré plus visiblement sur la figure 4, une platine 23 et un guide 24, de forme générale en C orienté vers l'intérieur, sont fixés respectivement sur une face arrière du bras d'appui 13, et à l'extrémité extérieure dudit bras d'appui 13, le guide 24 étant à proximité de la platine 23 et s'étendant longitudinalement de part et d'autres dudit bras d'appui 13.

La platine 23 comprend, sur sa face arrière, un plot cylindrique 25, réalisé en matière rigide par exemple en métal, et un élément amortisseur 26 élastique, de forme générale parallélépipédique. L'élément amortisseur 26 élastique est réalisé en matière synthétique souple, par exemple en caoutchouc. L'élément amortisseur 26 élastique comprend, au niveau d'une face arrière, des trous 26a, ici au nombre de quatre et situés à proximité des coins, pour le passage de vis de fixation 38, de manière à réaliser la mise en position de l'élément amortisseur 26 élastique sur la face arrière de la platine 23. L'élément amortisseur 26 élastique comprend également un évidement (non représenté) de forme correspondante à celle du plot 25, au niveau de sa face avant, de manière que la face arrière de l'élément amortisseur 26 élastique soit en contact avec la face avant de la platine 23. L'élément amortisseur 26 élastique présente un encombrement dans le sens transversal et horizontal sensiblement égal à l'encombrement de la platine 23. D'une manière analogue, le bras d'appui 14 comprend une platine pourvue d'un plot cylindrique rigide et d'un élément amortisseur (non représentés).

Le dispositif de châssis 1 comprend également des éléments de contact 27, 28 et 29, 30 (figure 1), montés respectivement sur les faces arrière des bras de butée 19, 20. Les éléments de contact 27 à 30, réalisés ici sous forme de rouleaux présentant une surface extérieure de révolution sensiblement bombée réalisée par exemple sous la forme d'une portion arc de cercle ou d'ellipse, sont situés respectivement à proximité de l'extrémité des bras de butée 19, 20. Les éléments de contact 27 à 30 sont réalisés en matière métallique, notamment en acier, pour obtenir des caractéristiques de rigidité élevées. Bien entendu, il est également possible d'utiliser d'autres types de matériau, par exemple des matières synthétiques rigides.

Les extrémités arrières des éléments de contact 27, 28 et 29, 30 sont décalées vers l'arrière par rapport aux surfaces arrières des butoirs 9, 10. En d'autres termes, les éléments de contact 27, 28 et 29, 30 sont agencés de manière à obtenir, lors du recul du véhicule automobile en direction d'un quai de chargement, un premier contact entre le quai de chargement et lesdits éléments de contact 27, 28 et 29, 30. Lors d'un recul du véhicule automobile, les éléments de contact d'un des bras de butée 19, 20 encaissent en grande partie les efforts appliqués sur le corps de châssis 2, les butoirs 9, 10 viennent en contact avec un quai de chargement après les éléments de contact, d'autant plus qu'un véhicule automobile recule rarement suivant une direction normale par rapport au quai de chargement, les butoirs 9, 10 étant ainsi peu sollicités et subissant une détérioration lente.

Les éléments de contact 27, 28 sont montés respectivement à rotation, sur le bras de butée 19, selon des axes sensiblement transversaux, par l'intermédiaire de pièces de fixation 31, 32 par exemple des chapes. La pièce de fixation 31 est fixée à l'extrémité extérieure du bras de butée 19, la pièce de fixation 32 étant décalée vers l'intérieur par rapport à la pièce de fixation 31. L'écartement transversal entre les pièces de fixation 31, 32 est sensiblement supérieur à la dimension transversale des éléments de contact 27 et 28.

Les pièces de fixation 31, 32 comprennent respectivement, à proximité d'une extrémité arrière, des trous 31a, 31b et 32a, 32b, les trous 31a, 31b étant respectivement sensiblement alignés transversalement avec les trous 32a, 32b. Lesdits trous 31 a, 31 b, 32a et 32b permettent le passage d'arbres 33, 34 des éléments de contact 28, 27, lesdits arbres 33, 34 étant fixés transversalement au niveau des pièces de fixation 31, 32. Les éléments de contact 27, 28 sont ainsi montés à rotation sur le bras de butée 19 avec un léger jeu transversal par rapport aux pièces de liaison.

Le bras de butée 19 comprend également, au niveau de sa face arrière, des éléments de rigidification, référencés 35 à 37, par exemple des nervures transversales se présentant sous forme de plaque d'épaisseur mince. Les éléments de rigidification 35, 37 sont montés respectivement aux extrémités supérieure et inférieure de la face arrière du bras de butée 19, l'élément de rigidification 36 étant monté sensiblement à mi-distance des éléments de rigidification 35, 37. Les éléments de rigidification 35 à 37 présentent une dimension transversale sensiblement supérieure à l'écartement transversal des pièces de fixation 31, 32. En d'autres termes, l'extrémité intérieure des éléments de rigidification 35 à 37 est décalée sensiblement vers l'intérieur par rapport à la pièce de fixation 32. D'une manière analogue, le bras de butée 20 (figure 1) comprend des pièces de fixation 39, 40 et des éléments de rigidification 41 à 43.

Le dispositif de châssis 1 comprend également ici une plaque de feux 44, de forme générale rectangulaire et présentant une dimension transversale sensiblement égale à la dimension transversale de la barre 11 anti-encastrement. La plaque de feux 44 est fixée par des organes de liaison au niveau de ladite barre 11 anti-encastrement et de l'entretoise 12. La plaque de feux 44 comprend, au niveau d'une face arrière et à proximité de bords extérieurs, des feux de lanternes 45 et 46 permettant une signalisation lumineuse à l'arrière du châssis. Les feux de lanternes 45, 46 sont sensiblement symétriques entre eux par rapport à un plan médian longitudinal du corps de châssis 2. Bien entendu, il est également envisageable de remplacer la plaque de feux 44 par deux plaques de feux montées de façon symétrique par rapport à un plan médian longitudinal vertical du corps de châssis 2, chacune desdites plaques étant fixées à la barre anti-encastrement 11 et s'étendant transversalement vers l'extérieur à partir d'une face extérieure des jambages 7, 8 de manière à pouvoir monter un hayon élévateur de conception classique.

Dans le cas d'un recul d'un véhicule automobile, notamment de type poids lourd, par rapport à un quai de chargement, les éléments de contact 27 à 30 viennent en contact avec le quai de chargement lors de l'accostage du véhicule automobile.

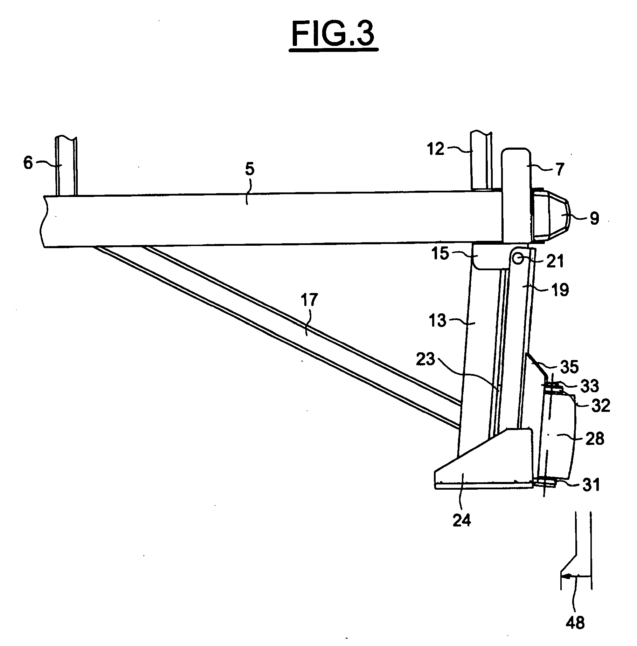

Si le véhicule automobile continue de reculer, le déplacement vers l'arrière du châssis 1 provoque un pivotement des bras de butée 19, 20, respectivement autour des axes d'articulations 21 et 22, vers l'avant par rapport au corps de châssis 2, à l'intérieur des guides 24 et 47. Les bras de butée 19, 20 se rapprochent respectivement des longerons 5, 4 jusqu'à ce que l'élément amortisseur 26 élastique de chacun desdits bras 19, 20 soit entièrement comprimé. Une telle compression correspond sensiblement à un déplacement longitudinal des bras de butée 19, 20 de l'ordre de 40 mm, illustré schématiquement sur la figure 3 par la flèche 48. Le déplacement des bras de butée 19, 20 correspondent en réalité à une rotation de quelques degrés pouvant être assimilé à un déplacement longitudinal. Les bras de butée 19, 20 sont ainsi sensiblement parallèles au bras d'appui 13, 14. En d'autres termes, les bras de butée 19, 20 peuvent pivoter entre une position extrême éloignée par rapport au corps de châssis 2, dans laquelle les éléments de contact 27 à 30 sont sensiblement décalés vers l'arrière par rapport aux butoirs 9, 10 et au corps de châssis 2, et une position extrême rapprochée dans laquelle les éléments de contact 27 à 30 sont sensiblement décalés vers l'avant par rapport aux butoirs 9, 10 et au corps de châssis 2. Bien entendu, il est également envisageable de prévoir un châssis 1 dans lequel les bras de butée 19 et 20, dans la position extrême éloignée, sont décalées vers l'arrière par rapport aux butoirs 9, 10 afin de réduire leur usure, l'effort s'exerçant sur le châssis étant principalement concentré sur les éléments de contact 27 à 30.

Si le véhicule automobile recule encore, les bras de butée 19, 20 transmettent, directement et sans effet d'amortissement, les efforts encaissés aux bras de butée 13 et 14, aux jambes de force 17 et 18, et aux longerons 5 et 4 formant deux triangles rigides indéformables particulièrement efficaces pour encaisser des efforts relativement élevés.

Toutefois dans des variantes de réalisation, il peut être envisageable de supprimer les jambes de forces 17 ou 18, ou encore de monter les éléments amortisseurs 26 élastiques directement à une extrémité arrière des jambes de force 17, 18 et de supprimer les bras d'appui 13, 14. Il est également envisageable de prévoir un corps de châssis 2 muni d'un élément de butée comprenant des éléments de contact 27, 28 et un élément amortisseur 26 élastique monté entre un élément du corps de châssis, par exemple un bras de butée 19 monté de façon rigide sur le corps de châssis 2, et les éléments de contact.

Lors d'un déplacement du véhicule automobile vers l'avant, les bras de butée 19, 20 reviennent dans leur position initiale sous l'action des éléments amortisseurs 26 élastiques.

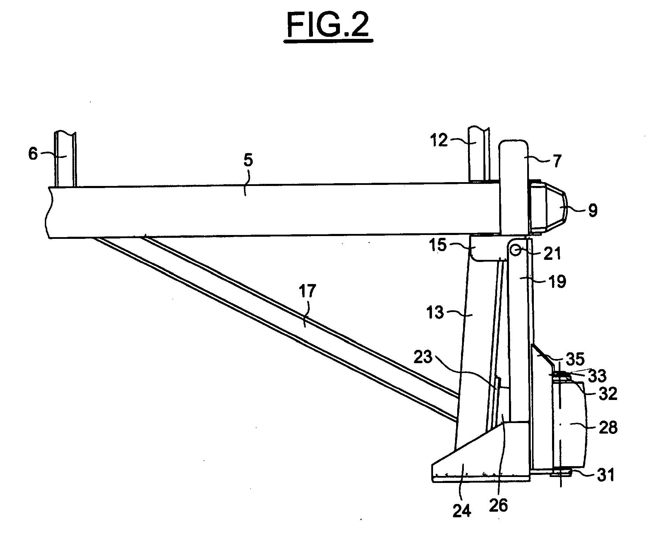

Dans le cas d'un recul suivant une direction sensiblement inclinée par rapport à une direction normale au quai de chargement, seul un des bras de butée 19, par exemple le bras 20 comme illustré sur les figures 2 et 3, se déplace longitudinalement par rapport au corps de châssis 2. Le bras de butée 19 et le bras d'appui 13 forme ainsi deux côtés d'un quadrilatère déformable dont les deux petits côtés sont délimités d'une part par les extrémités intérieures des bras 19, 13 et d'autre part par les extrémités extérieures desdits bras 19, 13. Lorsque que le bras de butée est en position extrême éloignée par rapport au corps de châssis 2, le quadrilatère forme sensiblement un parallélogramme. Par ailleurs, l'utilisation d'élément de contact 27 à 30 sous forme de rouleaux comprenant une surface extérieure de révolution sensiblement bombée présente l'avantage de permettre de réduire sensiblement les éventuels risques de détérioration prématurée des éléments de contact ou du quai de chargement. En effet, avec une surface extérieure de révolution sensiblement bombée, lors du recul du véhicule automobile suivant une direction sensiblement inclinée par rapport à une direction normale au quai de chargement, la surface de contact entre les éléments de contact 27 à 30 et le quai de chargement est augmentée et le risque d'avoir une détérioration de la périphérie de la surface latérale du rouleau est diminué par rapport à une utilisation de rouleau de forme générale cylindrique.

Le dispositif de châssis selon l'invention présente de nombreux avantages parmi lesquels, une durée de vie augmentée des éléments amortisseurs, par exemple par la réalisation d'un corps de châssis comprenant des bras de butée montés à rotation sur le corps de châssis et le montage desdits éléments amortisseurs sur une face arrière des bras de butée.

## Revendications

1. Dispositif de châssis de véhicule automobile pourvu d'un corps de châssis (2) allongé s'étendant sensiblement horizontalement, d'au moins un bras de butée (19) monté à une extrémité arrière du corps de châssis (2) et s'étendant vers l'extérieur de façon sensiblement transversale par rapport audit corps, d'un élément amortisseur (26) apte à amortir les efforts lors d'un choc du bras de butée avec un élément extérieur au dispositif, et d'au moins un rouleau (27, 28) monté à rotation sensiblement horizontalement et apte à venir en appui contre un élément extérieur au dispositif lors dudit choc, **caractérisé en ce que** le bras de butée (19) est mobile longitudinalement par rapport au corps de châssis (2), et **en ce que** l'élément amortisseur (26) est monté entre le corps de châssis et une face avant du bras de butée (19), le ou les rouleaux (27, 28) étant montés sur une face arrière dudit bras de butée.

2. Dispositif selon la revendication 1, dans lequel le bras de butée (19) est monté à rotation sur le corps de châssis (2) autour d'un axe d'articulation (21) sensiblement vertical.

3. Dispositif selon la revendication 1 ou 2, comprenant deux bras de butée (19, 20) symétriques entre eux par rapport à un plan médian longitudinal du corps de châssis (2).

4. Dispositif selon l'une quelconque des revendications précédentes, comprenant un bras d'appui (13, 14) monté de façon transversale par rapport au corps de châssis (2) et décalé vers l'avant par rapport au bras de butée (19, 20), l'élément amortisseur (26) étant monté entre ledit bras d'appui et le bras de butée.

5. Dispositif selon la revendication 4, comprenant une jambe de force (17) montée obliquement entre le corps de châssis (2) et le bras d'appui (13).

6. Dispositif selon l'une quelconque des revendications précédentes, comprenant une jambe de force (17) montée obliquement entre le corps de châssis (2) et le bras de butée (19), l'élément amortisseur (26) étant monté entre une extrémité de la jambe de force et le bras de butée.

7. Dispositif selon l'une quelconque des revendications précédentes, dans lequel le rouleau est réalisé en matière métallique.

8. Dispositif selon l'une quelconque des revendications précédentes, dans lequel le rouleau comprend une surface extérieure de révolution sensiblement bombée.

9. Dispositif selon l'une quelconque des revendications précédentes, dans lequel le rouleau est monté sur le bras de butée, à l'opposé d'un axe d'articulation (21) dudit bras.

10. Véhicule automobile, du type poids lourd, comprenant un dispositif de châssis selon l'une quelconque des revendications précédentes.

## Claims

1. Motor vehicle chassis device provided with an elongate chassis body (2) extending substantially horizontally, with at least one thrust arm (19) mounted at a rear end of the chassis body (2) and extending outwards substantially transversely with respect to the said body, with an energy-absorbing element (26) able to absorb force in the event of an impact between the thrust arm and an element external to the device, and with at least one roller (27, 28) mounted for rotation substantially horizontally and able to come to bear against an element external to the device in the said impact, **characterized in that** the thrust arm (19) is able to move longitudinally with respect to the chassis body (2), and **in that** the energy-absorbing element (26) is mounted between the chassis body and a front face of the thrust arm (19), the roller or rollers (27, 28) being mounted on a rear face of the said thrust arm.

2. Device according to Claim 1, in which the thrust arm (19) is mounted for rotation on the chassis body (2) about a substantially vertical pivot pin (21).

3. Device according to Claim 1 or 2, comprising two thrust arms (19, 20) that are symmetric with one another with respect to a longitudinal mid-plane of the chassis body (2).

4. Device according to any one of the preceding claims, comprising a bearing arm (13, 14) mounted transversely with respect to the chassis body (2) and offset forward with respect to the thrust arm (19, 20), the energy-absorbing element (26) being mounted between the said bearing arm and the thrust arm.

5. Device according to Claim 4, comprising a strut (17) mounted obliquely between the chassis body (2) and the bearing arm (13).

6. Device according to any one of the preceding claims, comprising a strut (17) mounted obliquely between the chassis body (2) and the thrust arm (19), the energy-absorbing element (26) being mounted between one end of the strut and the thrust arm.

7. Device according to any one of the preceding claims, in which the roller is made of a metallic material.

8. Device according to any one of the preceding claims, in which the roller comprises a substantially barrelled exterior surface of revolution.

9. Device according to any one of the preceding claims, in which the roller is mounted on the thrust arm at the opposite end of the said arm to a pivot pin (21).

10. Motor vehicle, of the heavy goods vehicle type, comprising a chassis device according to any one of the preceding claims.

## Patentansprüche

1. Rahmen einrichtung für Kraftfahrzeug mit einem länglichen Rahmenkörper (2), der sich im Wesentlichen horizontal erstreckt, wenigstens einem Anschlagarm (19), der an einem hinteren Ende des Rahmenkörpers (2) montiert ist und sich im Wesentlichen quer in Bezug auf den Körper nach außen erstreckt, einem Dämpferelement (26), das in der Lage ist, die Kräfte bei einem Zusammenstoß des Anschlagarms mit einem zu der Einrichtung externen Element zu dämpfen, und wenigstens eine Rolle (27, 28), die im Wesentlichen horizontal drehbar montiert und in der Lage ist, bei dem Zusammenstoß mit einem zu der Einrichtung externen Element in Anlage zu kommen, **dadurch gekennzeichnet, dass** der Anschlagarm (19) in Längsrichtung in Bezug auf den Rahmenkörper (2) bewegbar ist und dass das Dämpferelement (26) zwischen dem Rahmenkörper und einer Vorderseite des Anschlagarms (19) montiert ist, wobei die Rolle oder die Rollen (27, 28) auf einer Rückseite des Anschlagarms montiert sind.

2. Einrichtung nach Anspruch 1, bei der der Anschlagarm (19) an dem Rahmenkörper (2) um einen im Wesentlichen vertikalen Gelenkstift (21) herum drehbar montiert ist.

3. Einrichtung nach Anspruch 1 oder 2, die zwei in Bezug auf eine longitudinale Mittelebene des Rahmenkörpers (2) zueinander symmetrische Anschlagarme (19, 20) aufweist.

4. Einrichtung nach einem beliebigen der vorhergehenden Ansprüche, die einen Stützarm (13, 14) aufweist, der quer in Bezug auf den Rahmenkörper (2) und nach vorne versetzt in Bezug auf den Anschlagarm (19, 20) montiert ist, wobei das Dämpferelement (26) zwischen dem Stützarm und dem Anschlagarm montiert ist.

5. Einrichtung nach Anspruch 4, die eine Strebe (17) aufweist, die schräg verlaufend zwischen dem Rahmenkörper (2) und dem Anschlagarm (13) montiert ist.

6. Einrichtung nach einem beliebigen der vorhergehenden Ansprüche, die eine Strebe (17) aufweist, die schräg verlaufend zwischen dem Rahmenkörper (2) und dem Anschlagarm (19) montiert ist, wobei das Dämpferelement (26) zwischen einem Ende der Strebe und dem Anschlagarm montiert ist.

7. Einrichtung nach einem beliebigen der vorhergehenden Ansprüche, bei der die Rolle aus einem metallischen Werkstoff hergestellt ist.

8. Einrichtung nach einem beliebigen der vorhergehenden Ansprüche, bei der die Rolle eine im Wesentlichen ballige äußere Rotationsfläche aufweist.

9. Einrichtung nach einem beliebigen der vorhergehenden Ansprüche, bei der die Rolle an dem Anschlagarm auf der in Bezug auf den Gelenkstift (21) entgegengesetzten Seite des Arms montiert ist.

10. Kraftfahrzeug nach Art eines Schwerlastfahrzeugs, das eine Rahmeneinrichtung nach einem beliebigen der vorhergehenden Ansprüche aufweist.
